Europäisches Patentamt

European Patent Office

Office européen des brevets

(19)

(11) **EP 0 820 190 A1**

(12) **DEMANDE DE BREVET EUROPEEN**

(43) Date de publication:
**21.01.1998 Bulletin 1998/04**

(51) Int Cl.$^6$: **H04N 3/15**

(21) Numéro de dépôt: **97401686.7**

(22) Date de dépôt: **11.07.1997**

(84) Etats contractants désignés:
**AT BE CH DE DK ES FI FR GB GR IE IT LI LU MC NL PT SE**

(30) Priorité: **16.07.1996 FR 9608855**

(71) Demandeurs:
• **THOMSON-CSF**
**75008 Paris (FR)**
• **Sofradir**
**92290 Châtenay Malabry (FR)**

(72) Inventeurs:
• **Audier, Marcel**
**94117 Arcueil Cedex (FR)**
• **Besnard, Véronique**
**94117 Arcueil Cedex (FR)**
• **Rigaux, Guy**
**94117 Arcueil Cedex (FR)**

(74) Mandataire: **Lincot, Georges et al**
**THOMSON-CSF-S.C.P.I.,**
**13, Avenue du Président**
**Salvador Allende**
**94117 Arcueil Cédex (FR)**

(54) **Circuit de lecture de barrettes de photodétecteurs**

(57)    Le circuit de lecture s'applique aux imageurs à balayage optomécanique. Le circuit selon l'invention est destiné à la lecture de barrettes de photodétecteurs comportant un nombre déterminé N de voies de détection constituées chacune de $N_d$ capteurs disposés dans le sens de balayage, tel que chaque point d'une image soit analysé successivement par $N_d$ capteurs d'une voie.

Il comprend une échelle de sommation de courant (1), associée à chaque voie de détection, composée d'un nombre déterminé M de circuits de sommation de courant ($T_p$, $T_m$) et couplée à la voie détection par l'intermédiaire d'un dispositif de conversion tensions courant (2)

Applications : Imageurs thermiques.

FIG.2

## Description

La présente invention concerne un circuit de lecture de barrettes de photodétecteurs. Elle s'applique notamment aux imageurs thermiques de hautes performances utilisant un balayage optomécanique de l'image perpendiculairement à une barrette de photodétecteurs.

Dans ces imageurs, le balayage est effectué par un système optomécanique adapté comportant en particulier un miroir mobile et une combinaison optique de formation et de projection d'une image de la scène observée sur la barrette de détection.

Classiquement, la barrette comporte dans la direction perpendiculaire au balayage, un nombre N de voies de détection permettant de lire en parallèle N champs instantanés. Dans le but d'améliorer la sensibilité des imageurs, chaque voie de détection comporte un nombre déterminé $N_d$ de "capteurs" alignés dans le sens du balayage, tel que chaque point ou pixel du champ de prise de vue soit analysé successivement par chacun des $N_d$ capteurs. L'amélioration de la sensibilité est obtenue en recalculant en phase puis en additionnant, grâce à des circuits spécialisés, les signaux électriques délivrés par chacun des capteurs d'une même voie. Du fait que le bruit s'ajoute de façon quadratique, l'ajout des signaux fournis par les $N_d$ capteurs permet d'améliorer le rapport signal à bruit du facteur $\sqrt{N_d}$. Ce traitement des signaux est connu dans la littérature spécialisée sous le vocable "d'intégration retardée" et est souvent désigné sous l'abréviation anglo-saxonne TDI de "Time Delay and Integration".

Dans les réalisations connues, à chaque élément de détection est associé un circuit d'injection et d'intégration des photo-charges générées par les cellules photosensibles proportionnellement à l'éclairement reçu. En fin de période d'intégration, la lecture de l'état de l'intégrateur a lieu soit par un registre à décalage comportant autant d'entrées latérales que la voie de détection soit dans les réalisations en technologie CMOS par un circuit sommateur comportant des amplificateurs opérationnels à capacités commutés.

Comme le nombre d'informations en cours de traitement, à un instant donné, est fixé par le nombre de voies de détection "N", le nombre de capteurs par voie $N_d$, le rapport entre le pas $P_d$ des capteurs et le pas $P_e$ d'échantillonnage de l'image dans les sens du balayage et qu'à chacune de ces informations est affecté un opérateur d'intégration retardé TDI comportant $N.N_d.P_d/P_e$ sommateurs, les dimensions des barrettes se trouvent être rapidement limitées par d'une part, l'encombrement du circuit de lecture et d'autre part, par la puissance dissipée. A titre d'exemple, si $N = 1000$, $N_d = 10$ et $P_d/P_c = 3$, 30000 sommateurs TDI sont nécessaires.

Par ailleurs, le bruit basse fréquence, le gain limité, les dispersions de gain et d'offset des amplificateurs opérationnels, auxquels se conjuguent les fluctuations des valeurs des capacités de sommation, conduisent à superposer au signal vidéo restitué un bruit additionnel qu'il est difficile et coûteux de corriger.

Le but de l'invention est de palier les inconvénients précités.

A cet effet l'invention a pour objet un circuit de lecture de barrette de photodétecteurs pour imageurs à balayage optomécanique, la barrette comportant un nombre déterminé N de voies de détection constituées chacune de $N_d$ capteurs disposés dans le sens de balayage, tel que chaque point de l'image soit analysé successivement par $N_d$ capteurs d'une voie, caractérisé en ce qu'il comprend une échelle de sommation de courant associée à chaque voie de détection, composée d'un nombre déterminé M de circuits de sommation de courant et couplée à la voie de détection par l'intermédiaire d'un dispositif de conversion tension-courant.

L'invention a principalement pour avantage qu'elle permet de réaliser des circuits de sommation dont les performances ne dépendent ni d'un contrôle précis des aspects géométriques ou des caractéristiques électriques des transistors mis en oeuvre, ni des capacités flottantes, linéaires et précises, toujours difficiles à réaliser et coûteuses en surface de silicium.

D'autres caractéristiques et avantages de l'invention apparaîtront à l'aide de la description qui suit faite en regard des dessins annexés qui représentent:

La figure 1, un exemple schématisé de voies de détection composées de barrettes de capteurs photosensibles couplé à un circuit de lecture.

La figure 2, un exemple de mis en oeuvre d'un circuit de lecture de barrettes de photodétecteurs selon l'invention.

La figure 3, un mode de réalisation d'un sommateur de courant pour la mise en oeuvre du circuit de la figure 2.

La figure 4, un mode de réalisation d'un circuit de conversion tension courant pour la mise en oeuvre du circuit de la figure 2.

Les figures 5 et 6, des perfectionnements pouvant être apportés aux circuits des figures 3 et 4.

La figure 7, un schéma de principe pour expliciter le fonctionnement d'une mémoire de courant.

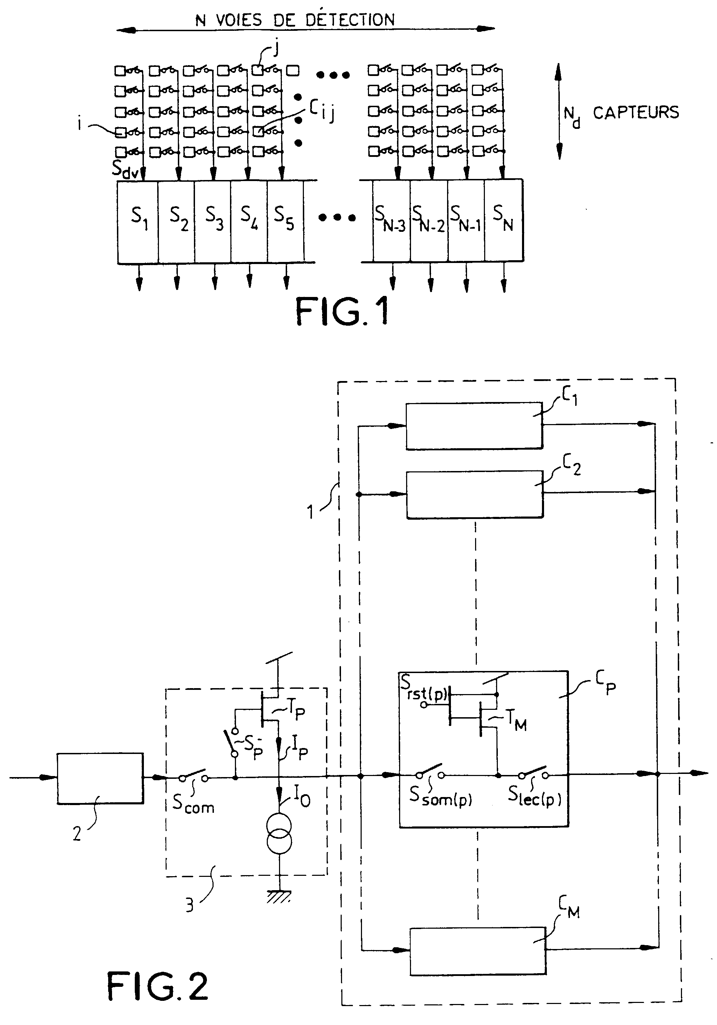

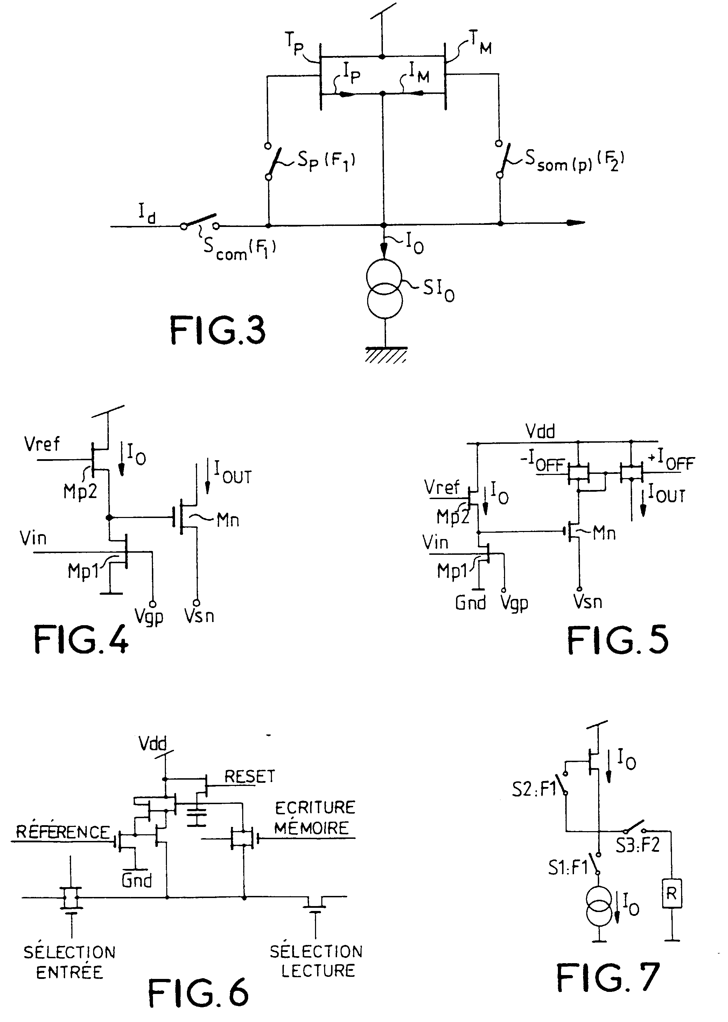

Le circuit de lecture selon l'invention qui est représenté à la figure 1 comprend N dispositifs de sommation $S_1$ à $S_N$ couplés aux sorties respectives de N voies d'une barrette de détection composées chacune par $N_d$ capteurs intégrateurs $C_{ij}$. Chacun des capteurs $C_{ij}$ est disposé au croisement d'une ligne i et d'une colonne j de la barrette suivant une organisation matricielle et est composé par exemple de façon connue par un photodétecteur couplé à un amplificateur opérationnel câblé en intégrateur. Chaque colonne j forme ainsi une voie de détection qui est orientée dans le sens de balayage de l'image. Elle comporte un nombre déterminé $N_d$ de capteurs intégrateurs reliés respectivement par l'intermédiaire d'interrupteurs $I_{ij}$ à un même dispositif de sommation Sj dont un exemple de réalisation est montré à la figure 2. Celui-ci comprend, respectivement représentés à l'intérieur de lignes fermées en pointillés, une échelle de sommation en courant 1 couplée par son entrée à un dispositif de conversion tension-courant 2 par l'intermédiaire d'un étage amplificateur de courant 3. L'échelle de sommation en courant 1 se compose de M cellules de sommation $C_p$ $P \in 1...M$, chaque cellule étant reliée par l'intermédiaire d'un interrupteur $S_{SOM(p)}$ à la sortie de l'étage amplificateur de courant 3 pour former avec l'étage amplificateur de courant 3 un circuit intégrateur de courant organisé suivant le schéma de principe de la figure 3 où les éléments homologues à ceux de la figure 2 sont représentés avec les mêmes références. Ce circuit comporte deux transistors MOS, $T_p$ et $T_m$ fonctionnant en mémoire de courant selon le principe rappelé en Annexe 1. Ceux-ci sont reliés en parallèle par leurs électrodes de source et de drain et sont alimentés par une même source de courant $SI_o$. Les transistors $T_p$ et $T_m$ composent respectivement l'un "$T_p$" l'étage amplificateur 3 et l'autre "$T_m$" une cellule de sommation Cp. Les grilles des transistors $T_p$ et $T_m$ sont reliées respectivement à la source de courant $SI_o$ par l'intermédiaire d'un interrupteur $S_{som(p)}$. Un interrupteur $S_{com}$ relie également le point commun à l'interrupteur $S_p$ et à la source de courant $SI_o$, à la sortie du dispositif de conversion tension courant 2. Ainsi réalisé chaque circuit intégrateur permet d'effectuer la somme des impulsions de courant transmises par le convertisseur tension courant 3 lors de l'analyse de la voie de détection à laquelle il est relié. Cette sommation est réalisée en pratiquant durant le balayage de la voie de détection des ouvertures successives des interrupteurs $S_p$ et $S_{com}$ suivies de la fermeture de l'interrupteur $S_{som}$.

En début de cycle lorsque les interrupteurs $S_{com}$ et $S_p$ sont fermés et que l'interrupteur $S_{som(p)}$ est ouvert, le courant $I_{p1}$ qui circule dans le transistor $T_p$ est donné par la relation

$$I_{p1} = I_o - (I_{Mo} + I_{d1}) \qquad (1)$$

dans laquelle $I_o$ désigne le courant fourni par la source de courant $SI_o$, $I_{Mo}$ est le courant traversant le transistor $T_m$ et $I_{dr}$ est le courant fourni par le dispositif de conversion tension courant 2.

Après un premier cycle le courant $I_{M1}$ qui traverse le transistor $T_m$ devient

$$I_{M1} = I_o - I_{p1} = I_{mo} + I_{d1} \qquad (2)$$

et au $n^{ème}$ cycle ce courant devient

$$I_{Mn} = I_{Mo} + \sum_{k=1}^{n} I_{dk} \qquad (3)$$

Par ce principe, le transistor $T_m$ acquiert la capacité de débiter un courant dont l'amplitude correspond à la somme des échantillons de courants $I_{d(k)}$ présentés à l'entrée de l'intégrateur.

Un circuit logique séquenceur, non représenté, permet la commande d'un multiplexeur formé par la matrice d'interrupteurs "$S_{som(p)}$" afin de configurer l'échelle de sommation pour que le transfert des $N_d$ impulsions de courant correspondant à l'analyse d'un même pixel (P) de l'image se fasse toujours dans une seule et même cellule Cp de sommation qui lui est dédié. Ainsi, après que l'analyse d'un même pixel "p" du champ de prise de vue ait été faite par les $N_d$ capteurs de la voie, le point mémoire dédié à l'analyse de ce pixel acquiert dans le circuit intégrateur de courant correspondant une capacité de débit égale à :

$$I_{Mp,n} = I_{Mp,o} + \sum_{k=1}^{N_d} P_{p,d(k)} \qquad (4)$$

ce contenu est extrait par la fermeture de l'interrupteur $S_{lec(p)}$ commandé par le circuit séquenceur non représenté.

Lorsque ce contenu est extrait, le circuit intégrateur de courant formant chaque cellule de sommation $C_p$ est réinitialisé sous la commande du circuit séquenceur en formant l'interrupteur "Srst(p)" sur une tension de référence dont la valeur fixe celle du courant initial "$I_{M(i,o)}$".

Pour réaliser la conversion tension-courant, requise pour coupler les circuits d'intégration d'une voie de détection à une échelle de sommation 1 les circuits connus apparaissent mal adaptés au besoin d'une barrette de photodétecteurs composée de plusieurs centaines de voies. Pour palier cet inconvénient le circuit représenté à la figure 4 schématise un transconducteur compatible avec une grande densité d'intégration, dissipant peu de puissance et présentant une grande dynamique de fonctionnement linéaire. Il se compose de deux transistors MOSFET $M_{p1}$ et $M_{p2}$ montés en miroir de courant couplés à un transistor MOSFET de sortie $M_n$. Le transistor $M_{p1}$ de type p est traversé par un courant constant $I_o$ contrôlé par la branche secondaire d'un miroir de courant symbolisé par le transistor $M_{p2}$. Le potentiel du substrat du transistor $M_{p1}$ est imposé par la tension à convertir "$V_{in}$" provenant de la voie de détection correspondante. Le courant $I_{DS}$ traversant le transistor $M_{p1}$, est relié au potentiel de sa source, à potentiel de drain constant, par la relation :

$$I_{DS} = \frac{\beta}{2}(V_G - V_S - V_{Th})^2$$

où, $V_{Th}$ est une tension de seuil qui s'exprime en fonction du potentiel $V_{BS}$ source-substrat par

$$V_{Th} = V_{Tho_{VBS=o}} + \gamma_p(\sqrt{\phi + V_{BS}} + \sqrt{\phi})$$

$\gamma_p$ étant un coefficient d'effet de substrat et $\phi$ le potentiel du matériau.

En appliquant sur la grille du transistor $M_{p1}$, une tension

$$V_{GS} = \sqrt{2\frac{I_o}{\beta_p}}$$

et en répercutant le potentiel de source obtenu sur la grille du transistor $M_m$ de type N, la connexion de la source à une tension légèrement différente du potentiel de référence, permet d'obtenir une relation linéaire entre le courant traversant le transistor $M_n$ et la tension appliquée au substrat du transistor $M_{p1}$.

Le courant $I_{DS_N}$ correspondant est donné par la relation

$$I_{DS_N} = C_1(V_{in} + C_2)$$

avec $C_1 + = \frac{\gamma^2 \beta_n}{2}$ et

$$C_2 = V_{Thp} + \left(\frac{\gamma_p}{2} + \sqrt{\phi}\right)^2$$

Naturellement la mise en oeuvre de l'invention n'est pas limitée à l'exemple de réalisation qui vient d'être décrit.

Une augmentation des performances du circuit de la figure 4 peut être obtenue de la façon représentée à la figure 5 où les éléments homologues à ceux de la figure 4 sont représentés avec les mêmes références, par l'ajout de transistors MOSFET, $M_{p3}$ et $M_{p4}$ qui permettent d'ajouter ou de retrancher un courant de décalage respectivement loff -loff au courant fourni par le circuit. Egalement pour rendre minimum les effets provoqués par les différentes sources de bruit et la dispersion des caractéristiques des circuits intégrateurs il peut être utilisé des mémoires de courant préférentiellement conçues comme le suggère la figure 6 à l'aide de montages cascodes actifs type "superMOS". Celles-ci présentent l'avantage de rendre négligeable les effets de modulation de la longueur effective du canal MOS en fonction des variations de potentiel. Comme montré sur la figure 5, les interrupteurs $S_{com}$ et $S_{som}$ peuvent être d'une part, compensés pour annuler les effets du couplage entre les signaux de commande et la grille du transistor mémoire et d'autre part, réalisés avec des transistors de la plus petite taille afin de réduire l'effet de la charge mobile. Ce dernier effet peut aussi être marginalisé, en augmentant par exemple la capacité de grille du transistor mémoire ce qui permet également de réduire le bruit d'échantillonnage, et en opérant une fermeture lente des interrupteurs.

ANNEXE 1

La figure 7 rappelle le principe d'une mémoire de courant. Celle-ci se compose d'un transistor MOSFET $T_m$ alimenté par une source à courant constant $I_o$, et de trois interrupteurs $S_1$, $S_2$ et $S_3$. Lorsque le courant $I_o$ est suffisant, tel que

$$I_o \gg 2\beta \left(\frac{KT}{q}\right)^2 ,$$

la fermeture des interrupteurs $S_1$ et $S_2$, fait fonctionner le transistor $T_m$ en régime de forte inversion et établit simultanément sur la grille du transistor un potentiel $V_G$ tel que :

$$V_G = V_{Thp} + \sqrt{\frac{2I_o}{\beta}}$$

Dans les relations précédentes $\beta$ est un facteur de gain qui dépend de la largeur de grille W du transistor MOSFET, $V_{Thp}$ représente la tension de seuil du transistor et $\frac{KT}{q}$ est le potentiel thermodynamique qui est typiquement de 26mV pour T=300°K. L'ouverture des interrupteurs $S_1$ et $S_2$ puis la fermeture de l'interrupteur $S_3$ permet au transistor $T_M$ de débiter sur la charge R un courant $I_R$ tel que

$$I_R = \frac{\beta}{2} \left(V_g - V_{Thp}\right)^2$$

soit $I_R = I_o$

## Revendications

1. Circuit de lecture de barrette de photodétecteurs pour imageurs à balayage optomécanique, la barrette comportant un nombre déterminé N de voies de détection constituée chacune de $N_d$ capteurs disposés dans le sens de balayage, tel que chaque point de l'image soit analysé successivement par $N_d$ capteurs d'une voie, caractérisé en ce qu'il comprend une échelle de sommation de courant (1) associée à chaque voie de détection, composée d'un nombre déterminé M de circuits de sommation de courant ($C_1...C_M$, $T_p$) et couplée à la voie de détection par l'intermédiaire d'un dispositif de conversion tension-courant (2).

2. Circuit selon la revendication 1, caractérisé en ce que chaque circuit de sommation de courant ($C_1...C_M$, $T_p$) d'une voie de détection comprend un premier et un deuxième transistor MOSFET ($T_p$, $T_m$) reliés en parallèle par leurs électrodes de source et de drain et alimentés par une même source de courant constant ($SI_o$) pour fonctionner en mémoire de courant.

3. Circuit selon l'une quelconque des revendications 1 et 2, caractérisé en ce que le dispositif de conversion tension-courant (2) comprend un premier transistor MOSFET ($MP_1$) d'un premier type de conduction, traversé par un courant constant $I_o$, et dont le substrat est polarisé par la tension "Vin" fournie par la voie de détection et un deuxième transistor MOSFET (Mn) de conductibilité opposée au premier transistor, (Mn) connecté par sa grille à l'électrode de drain du premier transistor et couplé par son électrode de drain à l'entrée de l'échelle de sommation de courant (1).

4. Circuit selon la revendication 2, caractérisé en ce que les circuits de sommation ($C_1...C_M$, $T_p$) sont couplés au dispositif de conversion tension-courant (2) par l'intermédiaire d'un circuit de multiplexage "$S_{som(p)}$" pour permettre aux impulsions de courant délivrées par les $N_d$ capteurs associés à la voie de sommation et correspondant à l'analyse d'un même point d'une image, d'être sommées dans un même circuit de sommation de courant ($T_p$, $T_m$).

5

N VOIES DE DÉTECTION

$N_d$ CAPTEURS

$j$

$C_{ij}$

$i$

$S_{dv}$

| $S_1$ | $S_2$ | $S_3$ | $S_4$ | $S_5$ | $\bullet\bullet\bullet$ | $S_{N-3}$ | $S_{N-2}$ | $S_{N-1}$ | $S_N$ |

# FIG.1

$C_1$

$C_2$

1

$T_P$

$S_P^-$

$I_P$

$S_{com}$

$I_0$

2

3

$S_{rst(p)}$

$T_M$

$C_P$

$S_{som(p)}$

$S_{lec(p)}$

$C_M$

# FIG.2

FIG.3

FIG.4

FIG.5

FIG.6

FIG.7

Office européen
des brevets

**RAPPORT DE RECHERCHE EUROPEENNE**

Numero de la demande

EP 97 40 1686

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | EP 0 660 600 A (THOMSON CSF) 28 juin 1995<br>* colonne 3, ligne 9 - ligne 43; figure 1 *<br>--- | 1 | H04N3/15 |
| A | US 4 900 943 A (MARSHALL CHARLES M ET AL) 13 février 1990<br>* colonne 5, ligne 41 - colonne 6, ligne 28 *<br>* colonne 6, ligne 59 - ligne 64 *<br>* colonne 7, ligne 55 - colonne 8, ligne 17 *<br>----- | 1 | |
| | | | **DOMAINES TECHNIQUES RECHERCHES (Int.Cl.6)**<br><br>H04N |

Le présent rapport a été établi pour toutes les revendications

| Lieu de la recherche | Date d'achèvement de la recherche | Examinateur |
|---|---|---|
| LA HAYE | 15 septembre 1997 | Bequet, T |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)